# NOUVEAU FASCICULE DE BREVET EUROPEEN

(11) **EP 0 497 663 B2**
(45) Date de publication et mention de la décision concernant l'opposition: **09.10.2002**
(45) Mention de la délivrance du brevet: 11.05.1994
(21) Numéro de dépôt: 92400182.9
(22) Date de dépôt: 24.01.1992
(51) Int. Cl.: C23C 8/80, F16C 33/12

(54) **Procédé pour conférer à des pièces en métal ferreux, nitrurées puis oxydées, une excellente résistance à la corrosion tout en conservant les propriétés acquises de friction**
Verfahren zum Herstellen von korrosions-beständigen Eisenmetallwerkstücken mit Beibehaltung ihrer Reibungseigenschaften durch Nitrieren und anschliessendem Oxidieren
Method of manufacturing corrosion resistant steel components and keeping their friction properties by nitriding and then oxidizing them

(30) Priorité: 30.01.1991 FR 9101046
(43) Date de publication de la demande: 05.08.1992
(73) Titulaire: CENTRE STEPHANOIS DE RECHERCHES MECANIQUES HYDROMECANIQUE ET FROTTEMENT Société dite:, F-42160 Andrezieux Boutheon (FR)
(72) Inventeur: Mournet, Sylvie, F-42240 Saint-Maurice-en-Gourgois (FR); Gaucher, Antoine, F-42160 Andrezieux-Boutheon (FR); Michalot, Bernard, F-42160 Andrezieux-Boutheon (FR)
(74) Mandataire: CABINET BONNET-THIRION

(56) Documents cités:
- EP-A- 0 053 521
- EP-A- 0 122 762
- WO-A-87/05335
- DE-A- 4 027 011
- FR-A- 2 649 723
- HARTEREI-TECHNISCHE MITTEILUNGEN vol. 43, no. 6, Novembre 1988, MUNICH-DE pages 365 - 374; S. PAKRASI: "Niox - ein modifiziertes Nitrocarburierverfahren mit anschliessender Oxidation"
- PATENT ABSTRACTS OF JAPAN vol. 12, no. 159 (C-495)(3006) 14 Mai 1988; & JP-A-62 270 762
- HARTEREI-TECHNISCHE MITTEILUNGEN vol. 40, no. 2, Mars 1985, MUNICH-DE pages 77 - 79; E.J. MITTEMEYER: "Oberflächenoxidation von Nitrierschichten"
- Ruth Chatterjee-Fischer "Nitrieren und Nitorcarburieren", Expert-Verlag, Sindelfingen , 1986
- G.Wahl, Technische Mitteilungen, Sonderdruck aus VDI-Z 126 (1984), Heft 21,Seite 811-818
- M.Sprissler, "Differences in the Structure of the Compound Layer and its Dependence on the Nitriding Process", Pract.Met., VOl.. 24, pages 373-81, (1987)
- H.W.Schläpfer, "Drei Salzbad(sulfo)nitrocarburierverfahren im Vergleich", HTM, Vol.39, No.6, pages 266-272 (1984)

## Description

L'invention se rapporte à un procédé pour conférer à des pièces en métal ferreux, avec de bonnes propropriétés de friction, faible coefficient de frottement, résistance à l'usure et au grippage, une excellente résistance à la corrosion, procédé où les pièces sont nitrurées, puis oxydées, soit dans un bain de sels alcalins oxydants fondus, soit par une atmosphère ionisée oxydante, en sorte que les pièces comportent une couche externe nitrurée avec une sous-couche profonde compacte et une sous-couche superficielle poreuse.

On sait, notamment par FR-A-2 171 993 et FR-A-2 271 307, que la nitruration en bains de cyanates et carbonates fondus de pièces en métal ferreux améliore les propriétés de friction de ces pièces, en réduisant le coefficient de friction, et en augmentant la résistance à l'usure et au grippage. D'autres procédés de nitruration, tels que la nitruration ionique, exécutée en atmosphère ionisée contenant de l'azote élément ou en combinaison, conduisent à des propriétés comparables.

On sait en outre qu'une oxydation dans un bain de sels oxydants fondus, provoque des modifications de la surface nitrurée, qui acquiert ainsi, sans perdre ses bonnes propriétés de friction apportées par la nitruration, une amélioration notable de la résistance à la corrosion. Le document FR-A-2 525 637 décrit ainsi un traitement d'oxydation particulièrement efficace, effectué dans un bain de sels fondus comprenant en poids, de 99,5 à 85 % en poids d'un mélange constitué de 25 à 35 % en poids de nitrates alcalins, 8 à 15 % de carbonates alcalins, et le complément à 100 % d'hydroxydes alcalins, et de 0,5 à 15 % de sels oxygénés de métaux alcalins dont le potentiel normal d'oxydo-réduction par rapport à l'électrode de référence à hydrogène est inférieur à - 1,0 volt, bain dans lequel on insuffle un gaz contenant de l'oxygène avec un débit suffisant pour que le bain soit saturé en oxygène dissous, et l'on y maintient la teneur pondérale en particules insolubles à moins de 3 %.

On sait également oxyder les pièces nitrurées en atmosphère ionisée d'un gaz contenant de l'oxygène, avec des améliorations du même ordre de résistance à la corrosion.

Toutefois les exigences de tenue à la corrosion, soit en atmosphères agressives ou en l'absence de lubrification, soit pour des pièces soumises à des contraintes de fatigue, sont toujours croissantes, et les résistances à la corrosion obtenues par les procédés évoqués ci-dessus deviennent inférieures à ce que l'on peut souhaiter. Cela apparaît particulièrement vrai pour des pièces dont la forme est défavorable à l'homogénéité des opérations, ou pour lesquelles, en raison de séries peu importantes, il est difficile d'optimiser la succession d'opérations en maîtrisant, par exemple, les courbes de vitesse de variations de température.

L'invention a donc pour but d'améliorer la résistance à la corrosion de pièces en métaux ferreux préalablement nitrurées puis oxydées, de façon bien fiable, sans réduire les propriétés de friction conférées par la nitruration, mais éventuellement les améliorer.

Pour atteindre ce but, l'invention propose un procédé pour conférer à des pièces en métal ferreux, avec de bonnes propriétés de friction, faible coefficient de frottement, résistance à l'usure et au grippage, une excellente résistance à la corrosion, procédé où les pièces sont nitrurées dans un bain de sel fondu constitué essentiellement de carbonates et cyanates de métaux alcalins, Na, K, et Li, l'anion CO₃⁻⁻ étant présent pour 1 à 35% en poids et l'anion CNO⁻ pour 35 à 65 % en poids, tandis que, par rapport à la masse d'ions de métaux alcalins, les proportions pondérales sont de 25-42,6% pour Na⁺, 42,6-62,5% pour K⁺ et 11,3-17,1 % pour Li⁺, et contenant en outre une espèce soufrée en quantité telle que la teneur pondérale du bain en soufre élément soit comprise entre 0,001 et 1%, puis oxydées dans un bain de sels alcalins oxydants fondus comprenant en poids de 99,5% à 85% en poids d'un mélange constitué de 25 à 35% en poids de nitrates alcalins, 8 à 15% de carbonates alcalins, et le complément à 100% d'hydroxydes alcalins, et de 0,5 à 15% de sels oxygénés de métaux alcalins dont le potentiel normal d'oxydo-réduction par rapport à l'électrode de référence à hydrogène est inférieur ou égal à - 1,0 volt, bain dans lequel on insuffle un gaz contenant de l'oxygène avec un débit suffisant pour que le bain soit saturé en oxygène dissous, et l'on y maintient la teneur pondérale en particules insolubles à moins de 3%, en sorte que les pièces comportent une couche externe nitrurée avec une sous-couche profonde compacte et une sous-couche superficielle poreuse, caractérisé en ce que l'on conduit la nitruration et l'oxydation de façon que la sous-couche profonde ait une épaisseur d'au moins 4 µm, et la sous-couche superficielle une épaisseur comprise entre 2 et 20 µm, le diamètre des pores étant d'au moins 100 nm, et qu'après la phase d'oxydation on réalise sur la couche nitrurée-oxydée un enduit d'un polymère pris parmi les polymères et copolymères de fluorocarbures, les polymères et copolymères de polyuréthanne soit siliconés, soit fluorés, purs ou en mélange entre eux ou avec des polyuréthannes hydrocarbonés, les copolymères d'uréthannes et d'acryliques, les polyamides-imides, avec une épaisseur comprise entre 3 et 20 micromètres.

Comme le montreront les exemples ci-après, les pièces ainsi traitées peuvent supporter des durées d'exposition au brouillard salin de 500 à 1 500 heures sans qu'apparaissent des manifestations de corrosion. Selon l'état de la technique, des durées d'exposition de 250 heures apparaissaient satisfaisantes, à leur époque.

On connaît par le document WO-A-8 705 335 (P. FOX) un procédé pour améliorer la résistance à l'usure et à la corrosion de surfaces métalliques. Le procédé consiste essentiellement en une cémentation superficielle sur un lit fluidisé en atmosphère gazeuse. Dans une première étape une pièce est exposée à une atmosphère contenant de l'azote, de l'ammoniac et du gaz naturel, à une température comprise entre 400°C et 650°C pendant 1 à 5 heures. Puis, dans une seconde étape la pièce est exposée à une atmosphère gazeuse d'azote humidifié et contenant éventuellement de l'oxygène, à une température comprise entre 400°C et 650°C. Enfin dans une dernière étape, on parachève le traitement par l'enduction d'une composition de polymères, à base d'eau, de polysiloxanes et d'huiles phosphatantes, composition connue pour ses propriétés propres anticorrosives.

Une pièce ainsi traitée présente des sous-couches successives de natures différentes. La première étape de cémentation a pour effet de créer une zone sous-jacente profonde de nitrures diffusés d'une épaisseur d'environ 150 à 200 µm, surmontée d'une sous-couche "blanche" de nitrures purs d'une épaisseur d'environ 25 µm. La seconde étape de cémentation a pour effet de créer au-dessus de la sous-couche de nitrures purs une sous-couche d'oxydes d'une épaisseur d'environ 13 µm.

Le traitement final permet de maintenir l'intégrité des propriétés acquises en résistance à la corrosion et à l'usure par la cémentation superficielle de la pièce en milieu gazeux.

Les pièces traitées par ce procédé ne présentent pas de traces de corrosion après une exposition de 450 heures en brouillard salin.

Toutefois, ce document ne fait pas état d'amélioration particulière des qualités de frottements.

Par contre, les essais rapportés ci-après feront également apparaître que les pièces traitées selon l'invention présentent, en essais de frottement et par rapport à des pièces nitrurées et oxydées suivant l'état de la technique, des coefficients de frottement améliorés, une usure réduite, et des capacités de charge au moins aussi bonnes.

Cette amélioration des performances de friction démontre que l'enduit produit un effet propre sous des aspects inattendus notamment pour la vitesse d'usure et la capacité de charge. Par ailleurs, l'amélioration de la résistance à la corrosion n'est pas le seul fait de la présence de l'enduit, car, comme le montreront des exemples, le même enduit, appliqué sur des surfaces de substrats réputées pour favoriser l'accrochage de revêtements, et dans certains cas pour améliorer de soi la résistance à la corrosion, n'apporte pas d'amélioration comparable de la résistance à la corrosion.

Les épaisseurs préférées d'enduit seront comprises entre 3 et 15 µm ; les épaisseurs supérieures à 15 µm n'apportent rien à la résistance à la corrosion, apportent des modifications de cotes de pièces parfois gênantes, et une certaine tendance à l'effritement et au gommage.

La nitruration est effectuée dans un bain de sels fondus suivant FR-A-2 171 993, constitué essentiellement de carbonates et cyanates de métaux alcalins K, Na et Li, l'anion CO₃⁻⁻ étant présent pour 1 à 35 % en poids et l'anion CNO⁻ pour 35 à 65 % en poids, tandis que, dans le poids total des cations alcalins, les proportions pondérales sont de 25-42,6 % pour Na⁺, 42,6-62,5 % pour K⁺ et 11,3-17,1 pour Li⁺.

Le bain de sel de nitruration comprend en outre une espèce soufrée en quantité telle que la teneur pondérale en soufre élément soit comprise entre 0,001 et 1 %, suivant FR-A-2 271 307.

L'oxydation sera conduite dans un bain de sels fondus selon FR-A-2 525 637, évoqué ci-dessus, à des températures comprises entre 350° et 450°C.

Les caractéristiques et avantages de l'invention ressortiront mieux de la description qui va suivre, illustrée d'exemples expérimentaux.

### Exemple 1 - Résistance à la corrosion

On a nitruré des plaques échantillons en acier XC38, de dimensions 100 mm x 100 mm dans un bain de sels fondus, carbonates et cyanates de sodium, potassium et lithium selon FR-A-2 171 993 et FR-A-2 271 307, avec 37 % en poids d'ions cyanates CNO⁻ et 10 ppm d'ions S⁻⁻ environ, la température du bain étant de 570 ± 15°C, et la durée d'immersion des pièces étant de 90 min.

La couche de nitruration comprend, en composition pondérale, environ 87 % de nitrure de fer ε (Fe2-3N), environ 10 % de nitrure γ' (Fe₄N), le reste étant des oxydes, sulfures et oxysulfures de fer.

Structurellement la couche nitrurée présente une épaisseur de 15 µm avec une sous-couche profonde compacte de 8 µm d'épaisseur.

Au sortir du bain de nitruration les pièces sont immergées pendant 20 min. dans un bain de sels selon FR-A-2 525 637, à une température de 420 ± 15°C. Le bain était composé comme suit :

Dans un creuset à chauffage électrique de 1 litre, on fait fondre 1 020 g de potasse caustique, 510 g de nitrate de sodium et 170 g de carbonate de sodium. On y ajoute 85 g d'un mélange en parties pondérales égales de permanganate et de bichromate de potassium, dont les potentiels normaux d'oxydo-réduction sont inférieurs à - 1 volt par rapport à l'électrode à hydrogène.

Le creuset est muni d'un ajutage noyé relié à une source d'air sous pression à travers une vanne de réglage de débit, et un débitmètre capable de mesurer des débits entre 0,02 et 0,2 cm³/s. Acôté du creuset, on a disposé un filtre en fer fritté muni d'une jaquette chauffante, à travers lequel on fait périodiquement passer le contenu du creuset, pour arrêter les particules solides de taille supérieure à 3 µm, et ainsi maintenir le taux d'insolubles dans le creuset à une valeur convenable. Le débit d'air est de 0,42 l/h, soit 0,12 cm³/s.

Après ce traitement la couche nitrurée des pièces comporte du nitrure ε avec 6 % de nitrure γ', tandis que tous les composés oxysulfurés ont été transformés en oxyde de fer magnétite (Fe₃O₄), avec de l'oxygène en insertion dans les 2 à 3 premiers micromètres superficiels.

La résistance à la corrosion en brouillard salin normalisé s'établit à 50-60 heures pour les pièces nitrurées, et 200-250 heures pour les pièces nitrurées puis oxydées, tandis que les pièces avant traitement présentent une corrosion généralisée après quelques heures seulement.

Sur les pièces ainsi nitrurées puis oxydées on effectue un revêtement de 10 µm d'épaisseur de fluoroéthylène-propylène (FEP) par projection électrostatique d'une poudre de granulométrie 5 µm, suivie d'un traitement de frittage de 10 min. à 350°C.

La résistance à la corrosion en brouillard salin suivant la norme AFNOR NF x 41002 dépasse 1500 heures, aucune piqûre ou décollement de la couche de FEP n'étant observable à 1 500 heures d'exposition.

### Exemple 2 - Comparatif

On a opéré sur des pièces échantillons en acier de décolletage (norme AFNOR 40 MF 6) de diamètre 20 mm et hauteur 55 mm.

Ces pièces ont subi divers traitements de surface connus et réputés faciliter l'accrochage d'enduits, puis ont reçu un revêtement de FEP tel qu'à l'exemple 1, d'épaisseur 10 ± 1,5 µm (poudrage électrostatique et frittage à 350°C).

Après revêtement on a effectué, à l'aide d'une pointe à tracer, une rayure en croix suffisamment appuyée pour traverser le revêtement de FEP ; après quoi les éprouvettes ont subi l'essai au brouillard salin selon AFNOR x 41002.

On a suivi l'essai par observations visuelles quotidiennes, pour guetter l'apparition de piqûres de corrosion et de décollements de couche.

On récapitule, dans le tableau I ci-après, les résultats d'essais, en moyenne sur trois échantillons.

Tableau I (voir page suivante)

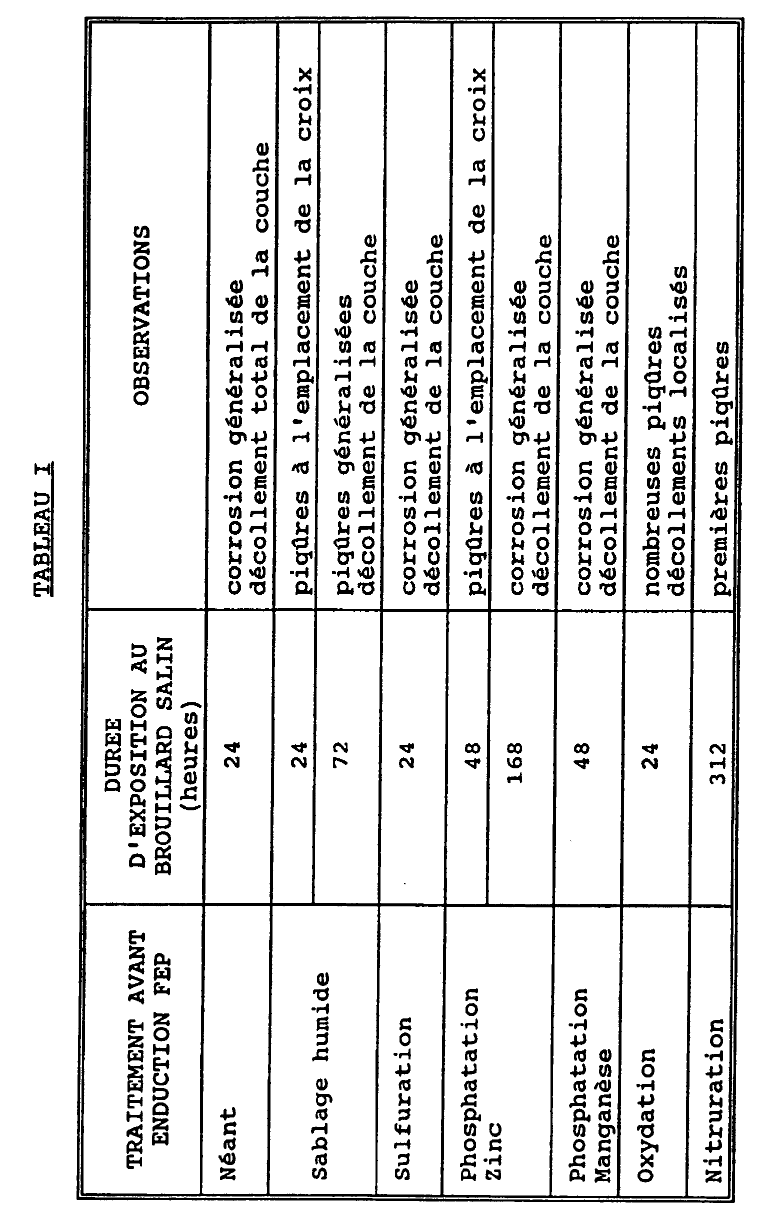

On notera que les oxydation et nitruration ont été effectuées sur des pièces distinctes, mais dans les bains respectifs selon l'exemple 1. L'oxydation seule n'apporte pratiquement pas d'amélioration de la résistance à la corrosion.

Des essais ont été effectués sur des pièces semblables, traitées selon l'exemple 1, et soumises à l'essai de brouillard salin après rayure en croix à la pointe à tracer. A 1 500 heures, on ne note ni piqûres, ni décollement de la couche.

### Exemple 3. Propriétés de frottement

Ces essais ont été effectués pour confirmer que l'amélioration de résistance à la corrosion du traitement suivant l'invention n'avait pas pour contrepartie une dégradation des propriétés de frottement.

Cet exemple a porté sur des pièces en acier au carbone XC 18, traitées par nitruration oxydation et enduction FEP comme à l'exemple 1.

### Essai A- Tribomètre

Les éprouvettes d'essai sont constituées par des couples constitués d'une bague de diamètre 35 mm en appui à sec sur une plaquette parallélépipédique de dimension 30 mm x 10 mm x 8 mm. La bague tourne à une vitesse correspondant à une vitesse de glissement de 0,55 m/s, et la charge d'appui croît linéairement en partant d'une valeur initiale de 10 daN.

Le résultat de l'essai est évalué par 4 valeurs : durée avant apparition des premiers incidents (grippage - broutage) ; charge maximale atteinte, coefficient de frottement moyen, usure.

Le même essai a été effectué, à titre de comparaison, sur des couples qui n'ont subi aucun traitement, des couples nitrurés, et des couples nitrurés puis oxydés. Les résultats sont indiqués dans le tableau II.

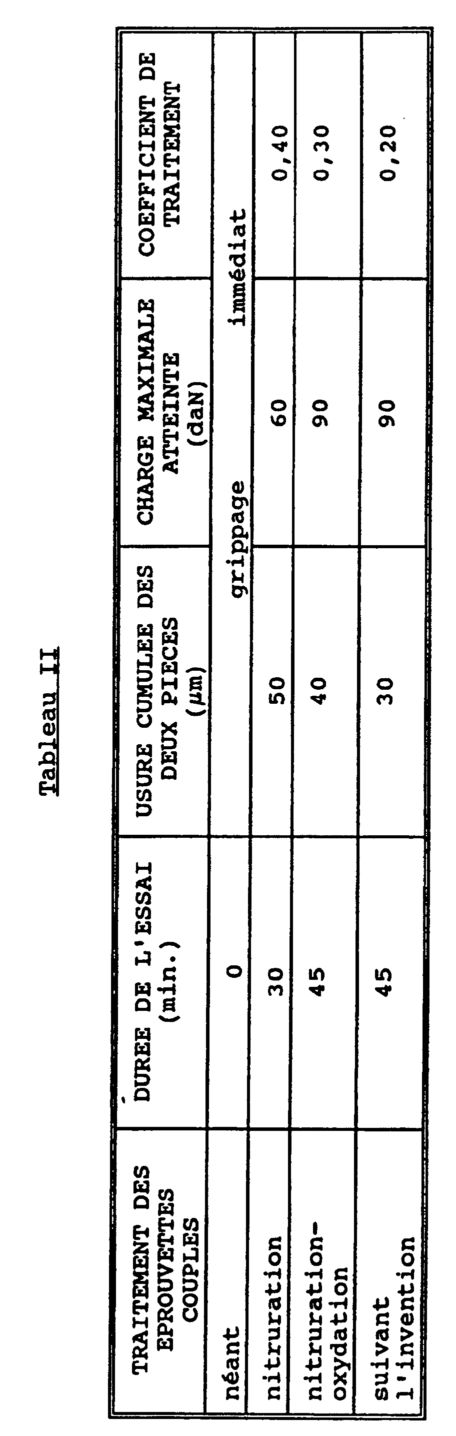

Il est remarquable que le traitement suivant l'invention réduise l'usure et le coefficient de frottement, sans affecter la capacité de charge par rapport aux pièces nitrurées puis oxydées.

### Essai B - Frottement plan

Un patin plan frotte sur une glissière plane en va-et-vient, avec une vitesse de 0,03 m/s. et sous une charge de 5 MPa (50 bars). La durée d'essai correspond à 500 cycles, et l'essai est effectué à sec dans l'air.

Les valeurs d'évaluation sont le coefficient de frottement et l'usure de la glissière. L'essai de comparaison a été effectué sur des pièces nitrurées et oxydées comme dans les essais précédents. Les résultats sont indiqués dans le tableau III suivant.

**Tableau III**

| TRAITEMENT | USURE DE GLISSIERE (µm) APRES 500 CYCLES | COEFFICIENT DE FROTTEMENT MOYEN |
|---|---|---|
| nitruration-oxydation | 7 | 0,48 |
| suivant l'invention | 6 | 0,43 |

### Essai C - Fatigue en flexion alternée

Les essais de fatigue en flexion alternée ont été effectués sur des éprouvettes tournantes en acier 35 CD 4 trempé revenu, sollicitées latéralement. Les éprouvettes normales présentent une limite d'endurance de 630 MPa (63 hbar). Après nitruration cette limite d'endurance passe à 820 MPa (82 hbar). Les éprouvettes traitées suivant l'invention présentent la même limite d'endurance que les éprouvettes nitrurées.

### Exemple 4 - Epaisseurs d'enduit appropriées

Des pièces telles qu'à l'exemple 1 sont recouvertes de couches d'enduit FEP par poudrage électrostatique et frittage dans les conditions de cet exemple 1, mais avec des épaisseurs échelonnées entre 1 et 40 µm.

A l'essai au brouillard salin, la durée d'exposition avant apparition de signes de corrosion ne diffère pas sensiblement, pour des épaisseurs jusqu'à 3 µm, de la durée d'exposition de pièces nitrurées-oxydées non enduites, soit 200-250 heures. Cette durée croît avec l'épaisseur d'enduit jusqu'à 10 µm environ, soit 350-400 h à 4 µm, 800 h à 6 µm et 1 500 h pour 10 µm.

Au-delà de 10 µm on n'enregistre plus d'accroissement significatif de la durée d'exposition avant apparition de signes de corrosion.

Toutefois la réalisation de revêtements épais peut devenir délicate en production industrielle pour éviter des irrégularités d'épaisseur, surtout si les formes des pièces sont complexes, et les fortes épaisseurs peuvent créer des difficultés de tolérances d'ajustage.

En outre, les revêtements épais, supérieurs à 20 µm, présentent des performances de frottement dégradées, avec des gommages, broutages, effritement de l'enduit. Dans la majorité des cas, il sera au moins prudent de ne pas dépasser des épaisseurs de 15 µm.

### Exemple 5 - Morphologie de la couche nitrurée

Les essais de cet exemple ont eu pour objet de déterminer les paramètres morphologiques de la couche nitrurée qui doivent être respectés pour que l'accroissement de résistance à la corrosion soient obtenus.

Ces essais ont porté sur des éprouvettes en acier XC 38, qui ont subi des opérations de nitruration, oxydation et enduction de FEP selon l'exemple 1, à l'exception des conditions de nitruration que l'on a fait varier, en appliquant des règles empiriques, pour obtenir des variations d'épaisseur de la couche nitrurée, et sélectivement de l'épaisseur respective de sous-couches profonde compacte et superficielle poreuse, ainsi que du diamètre des pores de la sous-couche superficielle.

On rappelle que, quelles que soient les conditions opératoires, la couche externe nitrurée comprend une sous-couche profonde compacte, et une sous-couche superficielle poreuse ; les conditions opératoires peuvent donc agir pour déterminer les épaisseurs respectives des sous-couches profonde compacte, et superficielle poreuse, ainsi que le diamètre des pores de la sous-couche superficielle.

Bien entendu, les diverses conditions opératoires n'ont pas chacune une action spécifique sur un paramètre de morphologie déterminé, mais agissent sur l'ensemble de ces paramètres avec des intensités différenciées.

On peut résumer ci-après les constatations faites :
- Lorsque la sous-couche profonde compacte présente une épaisseur trop faible, typiquement inférieure à 4 µm, la résistance à la corrosion n'est pas augmentée de façon significative ; ainsi, avec une sous-couche compacte d'épaisseur 2 µm, les premiers signes de corrosion en brouillard salin apparaissent à 240 heures.
- Lorsque la sous-couche poreuse superficielle dépasse 20 µm d'épaisseur, la couche est sujette à s'effriter rapidement (après 192 heures d'exposition au brouillard salin pour une sous-couche de 25 µm d'épaisseur) ; on peut attribuer ce résultat à une enduction inhomogène, fragilisée par le frittage.
- Si la sous-couche poreuse est absente, ou comporte des pores de diamètre inférieur en pratique à 100 nm, l'enduit se décolle en exposition au brouillard salin après des temps très courts, de l'ordre de 24 à 48 heures.

De ces essais, on infère que la sous-couche compacte doit être épaisse d'au moins 4 µm, que la sous-couche poreuse doit avoir une épaisseur comprise entre 2 et 20 µm, et que le diamètre des pores de cette sous-couche doit être supérieur à 100 nm.

### Exemple 6 - Réglage de la morphologie de la couche nitrurée

Cet exemple tend à dégager des règles empiriques pour le réglage des épaisseurs des sous-couches de la couche nitrurée.

On exécute la nitruration suivant les enseignements conjoints des documents de brevet FR-A-2 171 993 et FR-A-2 271 307, dans les conditions de départ de l'exemple 1, c'est-à-dire :
- teneur en ions cyanates CNO⁻ 37 %
- température 570°C
- durée de traitement 90 minutes

Sur un acier de type XC 38, dans les conditions de l'exemple 1, l'épaisseur totale de la couche nitrurée est typiquement de 13 à 15 µm, avec des épaisseurs de sous-couches pratiquement égales.

Dans les mêmes conditions, avec un acier XC 10, l'épaisseur de couche passe à 15-18 µm, et avec un acier Z 38 CDV 5 à 8-10 µm, les épaisseurs de sous-couches restant sensiblement égales.

On remarquera que les réglages intéressants peuvent se limiter à celui de l'épaisseur totale de couche nitrurée, dès lors que l'on peut maintenir le rapport des épaisseurs de sous-couche approximativement à l'égalité, et que le diamètre des pores n'est pas sensiblement affecté.

Les paramètres qui permettront d'ajuster l'épaisseur totale de couche nitrurée sans déséquilibrer le rapport d'épaisseur des sous-couches ou réduire à l'excès le diamètre des pores dans la sous-couche superficielle seront la teneur en espèces soufrées (ici K₂S) et la quantité d'air insufflée dans le bain.

Ces paramètres seront ajustés en fonction de la masse du bain de sel, et celle des pièces traitées journellement.

| Bain de 500 kg de sels fondus | | |
|---|---|---|
| - nature des pièces traitées | acier | fonte |
| -quantité de pièces traitées/24 h | 1 000 kg | 1 000 kg |
| -débit d'air à insuffler dans le bain | 250 l/h | 250 l/h |
| -quantité de sulfure de potassium K₂S/jour | 8-9 g | 12-13 g |

| Bain de 1 000 kg de sels fondus | | | |
|---|---|---|---|
| Pièces en acier | | | |
| Quantité par 24 h de pièces traitées | 1 000 kg | 2 000 kg | 3 000 kg |
| K₂S à rajouter par 24 h | 16 g | 19 g | 23 g |

### Exemple 7 - Nature de l'enduit polymère

Outre le copolymère fluoréthylène-fluoropropylène, d'autres polymères ont été essayés pour réaliser l'enduit ; ceux qui seront cités ci-après ont été déposés en couches de 10 µm d'épaisseur, et ont présenté des résistances à la corrosion en présence de brouillard salin normalisées d'au moins 1 000 heures, et des propriétés frottantes équivalentes à celles données dans l'exemple 3.
Polymères de fluorocarbures
Le polytétrafluoréthylène (̵CF₂-CF₂)̵ₙ
Copolymères de fluorocarbures
Le FEP déjà cité
Le PFA de formule 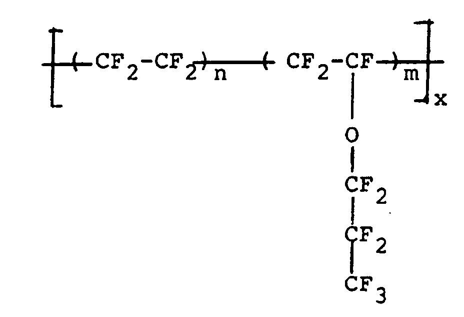 Polyuréthannes fluorés
Produits de réaction entre un isocyanate de formule 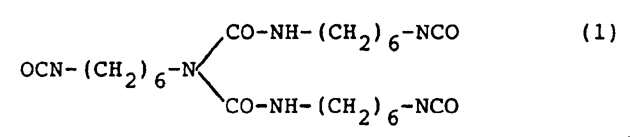 et un polyol fluoré de formule (2) 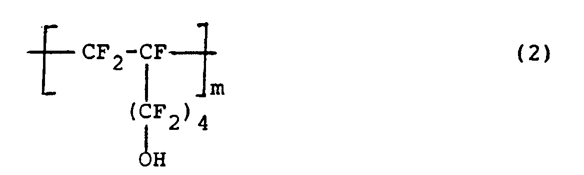 Polyuréthannes siliconés
Produit de réaction de l'isocyanate de formule (1) et un polyol siliconé de formule (3) 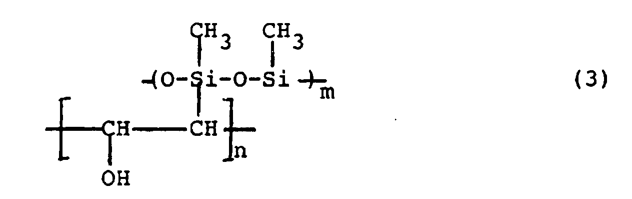 Copolymères de polyuréthannes
Copolymères obtenus par réaction de l'isocyanate de formule (1) avec le polyol fluoré de formule (2) et le polyol siliconé de formule (3)
Copolymères obtenus par réaction de l'isocyanate de formule (1) avec le polyol fluoré de formule (2) et un polyol de formule (4) 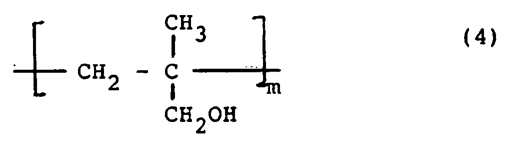 Copolymère obtenu par réaction de l'isocyanate de formule (1) avec le polyol fluoré de formule (2) et un polyol acrylique de formule 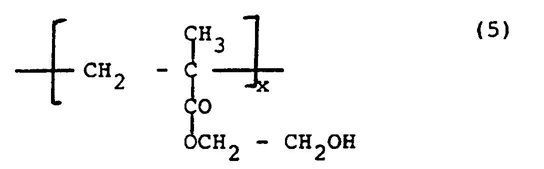 Polyamides-imides 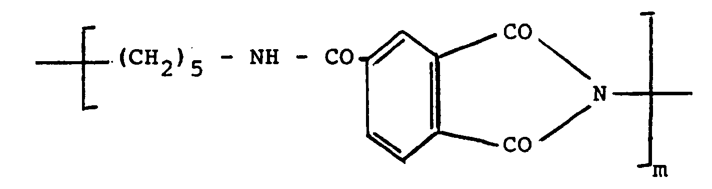 ou

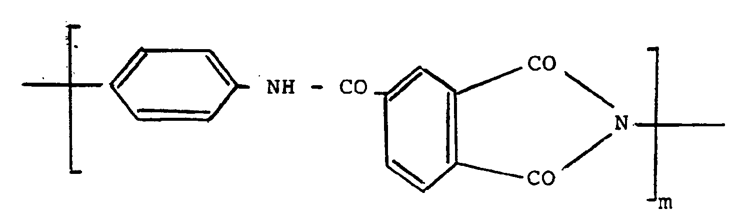

### Exemple 8 - Procédés de revêtement

Outre l'exécution de l'enduit par poudrage électrostatique et frittage, cet enduit peut être exécuté au trempé.

On part de pièces en acier X 38 nitrurées et oxydées suivant l'exemple 1.

### 8-1 - Revêtement au trempé de FEP

On met en suspension dans un solvant constitué d'un mélange de méthyl-isobutyl-cétone (MIBK) et de N méthylpyrrolidone (NMP), une poudre de FEP de granulométrie voisine de 5 µm. Les proportions de FEP et des composants du solvant sont ajustées, expérimentalement, pour amener la viscosité de la suspension à une valeur convenable pour que, après immersion et traitement subséquent, l'épaisseur finale d'enduit de FEP soit de 8-10 µm.

On immerge les pièces dans la suspension, on les retire et on les égoutte ; après quoi les pièces sont étuvées à 350°C pendant 10 minutes pour fritter le FEP.

En exposition au brouillard salin, aucun signe de corrosion n'apparaît à 600 heures.

### 8-2 - Revêtement de polyuréthanne au trempé

On fait réagir un polyisocyanate et un polyol, et on ajoute des solvants pour ajuster la viscosité à une valeur convenable pour l'épaisseur de revêtement voulue, et ralentir la réaction de condensation du polyuréthanne.

Les pièces sont immergées dans le milieu réactionnel, puis retirées et égouttées. Elles sont ensuite étuvées à 60°C jusqu'à évaporation complète du solvant, ce qui permet à la condensation de s'achever.

Une couche de polyuréthanne ainsi déposée avec une épaisseur de 5-6 µm confère aux pièces une résistance à la corrosion telle qu'après 500 heures d'exposition au brouillard salin, aucun signe de corrosion n'est perceptible.

Bien entendu, l'invention n'est pas limitée aux exemples décrits mais en embrasse toutes les variantes d'exécution, dans le cadre des revendications.

## Revendications

1. Procédé pour conférer à des pièces en métal ferreux, avec de bonnes propriétés de friction, faible coefficient de frottement, résistance à l'usure et au grippage, une excellente résistance à la corrosion, procédé où les pièces sont nitrurées dans un bain de sel fondu constitué essentiellement de carbonates et cyanates de métaux alcalins, Na, K, et Li, l'anion CO₃⁻⁻ étant présent pour 1 à 35% en poids et l'anion CNO⁻ pour 35 à 65 % en poids, tandis que, par rapport à la masse d'ions de métaux alcalins, les proportions pondérales sont de 25-42,6% pour Na⁺, 42,6-62,5% pour K⁺ et 11,3-17,1 % pour Li⁺, et contenant en outre une espèce soufrée en quantité telle que la teneur pondérale du bain en soufre élément soit comprise entre 0,001 et 1%, puis oxydées dans un bain de sels alcalins oxydants fondus comprenant en poids de 99,5% à 85% en poids d'un mélange constitué de 25 à 35% en poids de nitrates alcalins, 8 à 15% de carbonates alcalins, et le complément à 100% d'hydroxydes alcalins, et de 0,5 à 15% de sels oxygénés de métaux alcalins dont le potentiel normal d'oxydo-réduction par rapport à l'électrode de référence à hydrogène est inférieur ou égal à - 1,0 volt, bain dans lequel on insuffle un gaz contenant de l'oxygène avec un débit suffisant pour que le bain soit saturé en oxygène dissous, et l'on y maintient la teneur pondérale en particules insolubles à moins de 3%, en sorte que les pièces comportent une couche externe nitrurée avec une sous-couche profonde compacte et une sous-couche superficielle poreuse, **caractérisé en ce que** l'on conduit la nitruration et l'oxydation de façon que la sous-couche profonde ait une épaisseur d'au moins 4 µm, et la sous-couche superficielle une épaisseur comprise entre 2 et 20 µm, le diamètre des pores étant d'au moins 100 nm, et qu'après la phase d'oxydation on réalise sur la couche nitrurée-oxydée un enduit d'un polymère pris parmi les polymères et copolymères de fluorocarbures, les polymères et copolymères de polyuréthanne soit siliconés, soit fluorés, purs ou en mélange entre eux ou avec des polyuréthannes hydrocarbonés, les copolymères d'uréthannes et d'acryliques, les polyamides-imides, avec une épaisseur comprise entre 3 et 20 micromètres.

2. Procédé suivant la revendication 1, **caractérisé en ce que** l'épaisseur d'enduit est comprise entre 3 et 15 micromètres.

3. Procédé suivant la revendication 1, **caractérisé en ce que** la température du bain oxydant est comprise entre 350° et 450°C.

## Patentansprüche

1. Verfahren zum Verleihen einer exzellenten Korrosionsbeständigkeit an Stücke aus Eisenmetallwerkstoff mit guten Reibungseigenschaften, einem geringen Reibungskoeffizienten, Widerstandsfähigkeit gegen Verschleiß und Blockieren, in welchem Verfahren die Stücke in einem Bad aus einer Salzschmelze, welche im wesentlichen aus Carbonaten und Cyanaten der Alkalimetalle Na, K und Li besteht, nitridiert werden, wobei das CO₃⁻⁻-Anion in einer Menge von 1 bis 35 Gew.-% und das CNO⁻-Anion in einer Menge von 35 bis 65 Gew.-% vorliegt, während in bezug auf die Masse der Alkalimetallionen die Gewichtsverhältnisse 25 - 42,6 % für Na⁺, 42,6 - 62,5 % für K⁺ und 11,3 - 17,1 % % für Li⁺ betragen, und enthaltend weiters eine schwefelhaltige Substanz in einer Menge, daß der Gewichtsanteil des Bades an elementarem Schwefel zwischen 0,001 und 1 % liegt, und anschließend in einem Salzschmelzebad aus oxidierenden Alkalimetallen oxidiert werden, umfassend 99,5 Gew.-% bis 85 Gew.-% einer Mischung, bestehend aus 25 bis 35 Gew.-% Alkalimetallnitraten, 8 bis 15 Gew.-% Alkalimetallcarbonaten und dem Rest auf 100 % aus Alkalimetallhydroxiden, und von 0,5 bis 15 % oxidierende Alkalimetallsalze, deren normales Redoxpotential in bezug auf die Wasserstoff-Bezugselektrode kleiner oder gleich -1,0 Volt ist, in welches Bad man ein sauerstoffhaltiges Gas mit einem ausreichenden Durchsatz einbläst, damit das Bad an gelöstem Sauerstoff gesättigt ist und worin man den Gewichtsanteil an unlöslichen Partikeln unter 3 % hält, so daß die Stücke eine äußere, nitridierte Schicht mit einer tiefliegenden, kompakten Zwischenschicht und einer oberflächlichen, porösen Zwischenschicht aufweisen, **dadurch gekennzeichnet, daß** man die Nitridierung und die Oxidation derart führt, daß die tiefe Zwischenschicht eine Dicke von wenigstens 4 µm und die oberflächliche Zwischenschicht eine Dicke zwischen 2 und 20 µm aufweist, wobei der Porendurchmesser wenigstens 100 nm beträgt, und daß man nach der Oxidationsphase auf der nitridierten-oxidierten Schicht einen Polymerüberzug, gewählt aus den Polymeren und Copolymeren der Fluorkohlenwasserstoffe, den entweder Silikon-substituierten oder fluorierten, reinen oder miteinander oder mit Kohlenwasserstoff substituierten Polyurethanen vermischten Polymeren und Copolymeren von Polyurethan, den Urethan-Acryl-Copolymeren und den Polyamiden-Imiden, mit einer Dicke zwischen 3 und 20 µm ausführt.

2. Verfahren nach Anspruch 1, **dadurch gekennzeichnet, daß** die Dicke des Überzuges zwischen 3 und 15 µm beträgt.

3. Verfahren nach Anspruch 1, **dadurch gekennzeichnet, daß** die Temperatur des oxidierenden Bades zwischen 350 und 450 °C gehalten wird.

## Claims

1. Process for imparting excellent corrosion resistance to articles made from ferrous metal, with good friction properties, a low coefficient of friction and resistance to wear and seizing, a process in which the articles are nitrided in a bath of molten salts consisting essentially of carbonates and cyanates of alkali metals, Na, K and Li, the CO₃⁻ anion being present for 1 to 35% by weight and the CNO⁻ anion for 35 to 65% by weight, whilst, with respect to the weight of alkali metal ions, the proportions by weight are 25-42.6% for Na⁺, 42.6-62.5% for K⁺ and 11.3-17.1% for Li⁺, and also containing a sulphurated species in a quantity such that the content by weight of the bath in terms of elemental sulphur is between 0.001 and 1%, and then oxidised in a bath of molten oxidising alkali salts comprising by weight 99.5% to 85% by weight of a mixture consisting of 25 to 35% by weight alkali nitrates, 8 to 15% alkali carbonates, and the remainder to 100% alkali hydroxides, and 0.5 to 15% oxygenated salts of alkali metals whose normal oxidation-reduction potential with respect to the hydrogen reference electrode is less than or equal to -1.0 volt, a bath into which there is blown a gas containing oxygen with a sufficient flow rate for the bath to be saturated with dissolved oxygen, and the proportion by weight of insoluble particles is maintained therein at less than 3%, so that the articles have a nitrided external layer with a compact deep sublayer and a porous surface sublayer, **characterised in that** the nitriding and oxidation are carried out so that the deep sublayer has a thickness of at least 4 µm, and the surface sublayer a thickness of between 2 and 20 µm, the diameter of the pores being at least 100 nm, and **in that** after the oxidation phase there is produced, on the nitrided/oxidated layer, a coating of a polymer taken from amongst polymers and copolymers of fluorocarbides, polymers and copolymers of polyurethane either containing silicone or fluorine, pure or in a mixture with each other or with hydrocarbon-containing polyurethanes, copolymers of urethanes and acrylics, or polyamides-imides, with a thickness of between 3 and 20 micrometres.

2. Process according to Claim 1, **characterised in that** the thickness of the coating is between 3 and 15 micrometres.

3. Process according to Claim 1, **characterised in that** the temperature of the oxidising bath is between 350° and 450°C.
